# DEMANDE DE BREVET EUROPEEN

(11) **EP 2 540 593 A2**
(43) Date de publication de la demande: **02.01.2013**
(21) Numéro de dépôt: 12173927.0
(22) Date de dépôt: 27.06.2012
(51) Int. Cl.: B62B 5/00, B62B 5/04

(54) **Chariot d'atelier équipé d'un mécanisme d'aide au démarrage et mécanisme d'aide au démarrage**

(30) Priorité: 27.06.2011 FR 1155710
(71) Demandeur: COUTIER INDUSTRIE, 57970 Basse Ham (FR)
(72) Inventeur: Coutier, Charles, 57570 CATTENOM (FR)
(74) Mandataire: Lavialle, Bruno François Stéphane

(57) **Abrégé**

L'invention concerne un chariot de manutention comportant une plateforme (1) roulante, un levier (2) de démarrage du chariot avec une première partie (2a), une deuxième partie (2b) coopérant avec un organe de son contact (4) avec le sol et une partie intermédiaire (2c) située entre les première et deuxième parties et reliée à la plateforme (1) avec une liberté de pivotement par rapport à cette dernière, la partie intermédiaire du levier exerçant, dans l'un - moteur- des deux sens de pivotement du levier, un effort sur la plateforme qui entraîne le déplacement de cette dernière dans un sens correspondant au sens de pivotement moteur du levier, la liaison de la plateforme et du levier étant une articulation (5) d'axe perpendiculaire à la direction du déplacement à imprimer au chariot, mobile en altitude par rapport à la plateforme (1) entre une première position dans laquelle l'organe de contact (4) susdit est éloigné du sol et une seconde position dans laquelle cet organe (4) est en contact avec le sol (S), la seconde position étant atteinte par abaissement du levier (2) à l'encontre d'un organe de rappel (8) de l'articulation dans sa première position et étant maintenue par une bielle (13) élastiquement télescopique.

## Description

La présente invention concerne les chariots de manutention que l'on emploie par exemple dans les ateliers de montage de l'industrie automobile pour notamment déstocker des composants d'un magasin, les apporter et les présenter au lieu de leur utilisation ou pour les transporter depuis le lieu de leur fabrication jusqu'au lieu de leur stockage.

### ARRIERE PLAN DE L'INVENTION

Ces chariots sont en général associés en un train de chariots, traîné par un véhicule motorisé depuis le lieu de déstockage jusqu'à la ligne de montage ou le lieu de fabrication jusqu'à l'endroit de leur stockage. Ils demandent une manoeuvre manuelle pour former le train ou le dissocier. Cette manipulation est un facteur de pénibilité pour un opérateur qu'il est nécessaire de réduire au maximum pour satisfaire aux dispositions de plus en plus exigeantes qui régissent les conditions de travail.

On sait que la pénibilité tient à l'effort que l'opérateur doit développer pour mettre en mouvement le chariot lorsqu'il est chargé. Il faut en effet vaincre l'inertie de la charge ainsi que la résistance qu'offre le sol au roulement du chariot (irrégularités du sol, particules, roulettes orientées dans une direction différente de la direction de circulation...).

Il a déjà été proposé des dispositifs d'aide au démarrage de ce type de chariots pour remédier à cette demande d'effort peu ergonomique.

Il s'agit tout d'abord des dispositifs de motorisation d'au moins un essieu du chariot. Ces dispositifs ont pour principal inconvénient de devoir faire appel à une source d'énergie embarquée, notamment une batterie d'accumulation d'énergie électrique. Cette batterie est associée à un moteur en prise avec l'essieu et des moyens de commande du moteur à la disposition de l'opérateur. On comprend qu'un chariot ainsi équipé est un matériel lourd qui, surtout, doit être inscrit dans une procédure de maintenance souvent rédhibitoire par rapport à la fonction du produit en termes d'investissements et de coûts de fonctionnement.

Il existe également des dispositifs d'assistance au démarrage qui comportent des composants permettant d'emmagasiner de l'énergie dérivée de celle dépensée par le véhicule moteur lors du déplacement du train de chariots. On citera à titre d'exemple le document FR 2 899 750.

Il existe enfin des dispositifs d'assistance au démarrage qui utilisent l'énergie musculaire développée par l'opérateur mais dans des conditions ergonomiques et économes. On citera à ce propos le document FR 2 613 996 qui décrit un couplage entre le timon de manoeuvre manuelle d'un transpalette et son essieu avant, par lequel tout pivotement du timon se traduit par un entraînement en rotation de cet essieu (transmission par chaîne et roue dentée ou par un jeu de pignons coniques). Dans le document DE 1 254 496, l'axe de pivotement du timon de manoeuvre et l'axe de la roue sont confondus et le basculement du timon est transmis à la roue par un mécanisme à cliquet débrayable.

Il existe enfin une dernière sorte de mécanismes d'assistance au démarrage qui opère à la manière d'un levier du deuxième genre. Ce levier, lié au bâti du chariot, prend appui par l'une de ses extrémités sur le sol de roulement du chariot. Cette extrémité devient alors un point fixe de pivotement inférieur, le levier étant manoeuvré manuellement autour de ce point de pivotement par son autre extrémité et dans le sens d'avancement à imprimer au chariot. Ainsi la zone de liaison du levier au chariot (donc le chariot) est déplacée sous un effort plus important mais sur une plus faible amplitude que le déplacement résultant de l'effort développé par l'opérateur manoeuvrant l'extrémité supérieure du levier. On citera, comme illustration de ce genre d'appareils, le document FR 2 919 253.

L'invention concerne un autre mécanisme d'assistance au démarrage qui met en application un levier du deuxième genre avec une structure de transmission d'efforts telle que la manoeuvre par l'opérateur soit simple.

### OBJET DE L'INVENTION

C'est ainsi que l'invention a pour objet un chariot de manutention comportant une plateforme roulante, un levier de démarrage du chariot avec une première partie, une deuxième partie coopérant avec un organe de son contact avec le sol et une partie intermédiaire située entre les première et deuxième parties et reliée à la plateforme avec une liberté de pivotement par rapport à cette dernière, la partie intermédiaire du levier exerçant, dans l'un - moteur - des deux sens de pivotement du levier, un effort sur la plateforme qui entraîne le déplacement de cette dernière dans un sens correspondant au sens de pivotement moteur du levier. La liaison de la plateforme et du levier est une articulation d'axe perpendiculaire à la direction du déplacement à imprimer au chariot, mobile en altitude par rapport à la plateforme entre une première position dans laquelle l'organe de contact susdit est éloigné du sol et une seconde position dans laquelle cet organe est en contact avec le sol, la seconde position étant atteinte par abaissement du levier à l'encontre d'un organe de rappel de l'articulation dans sa première position et étant maintenue par une bielle élastiquement télescopique ayant une première extrémité liée en altitude à l'articulation et une deuxième extrémité associée à des moyens débrayables de son blocage en position par rapport au chariot lorsque l'articulation est dans sa deuxième position.

Le principal avantage de l'invention réside dans le faible encombrement du mécanisme d'aide au démarrage et dans le nombre réduit de pièces qui le constituent.

Selon un premier mode de réalisation, la deuxième extrémité de la bielle élastiquement télescopique est reliée au chariot par une bielle de manière à former un embiellage à genouillère constituant les moyens de blocage en position de la deuxième extrémité de la bielle élastiquement déformable.

Selon un deuxième mode de réalisation, la deuxième extrémité de la bielle élastiquement télescopique est pourvue d'un axe reçu à coulissement le long d'une rainure qui est ménagée dans une platine solidaire du chariot et qui comporte un décrochement pour recevoir ledit axe lorsque l'articulation est au voisinage de sa deuxième position.

L'invention a également pour objet un mécanisme d'aide au démarrage.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 est une vue schématique partielle d'un premier mode de réalisation du chariot selon l'invention,
- la figure 2 est l'illustration d'une variante du premier mode de réalisation de ce chariot,
- les figures 3 à 5 sont des vues schématiques partielles de côté décomposant une manoeuvre de déplacement d'un chariot selon un deuxième mode de réalisation de l'invention,
- la figure 6 est une vue schématique en perspective du deuxième mode de réalisation.

### DESCRIPTION DETAILLEE DE L'INVENTION

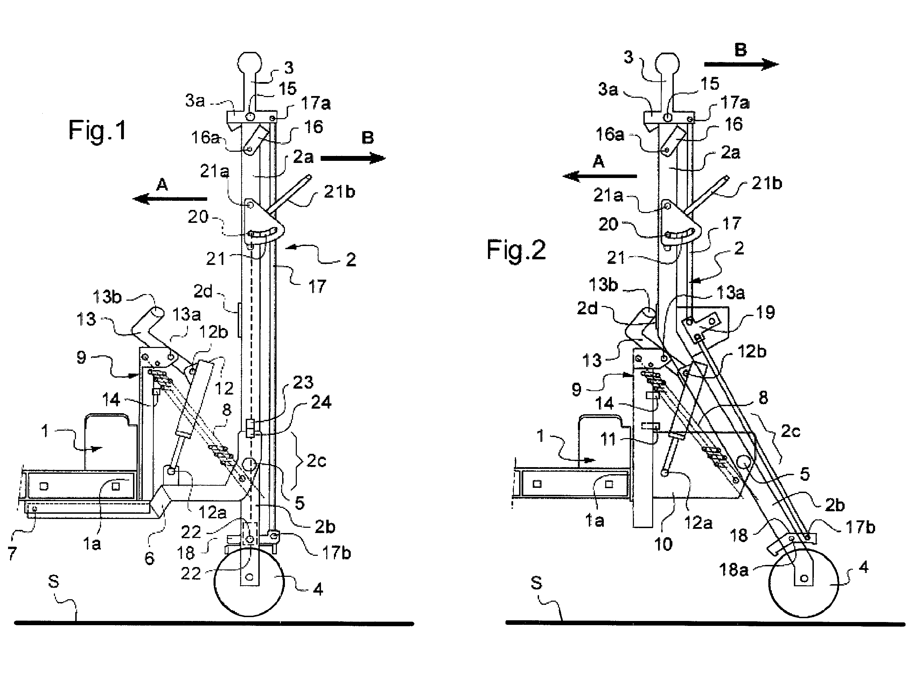

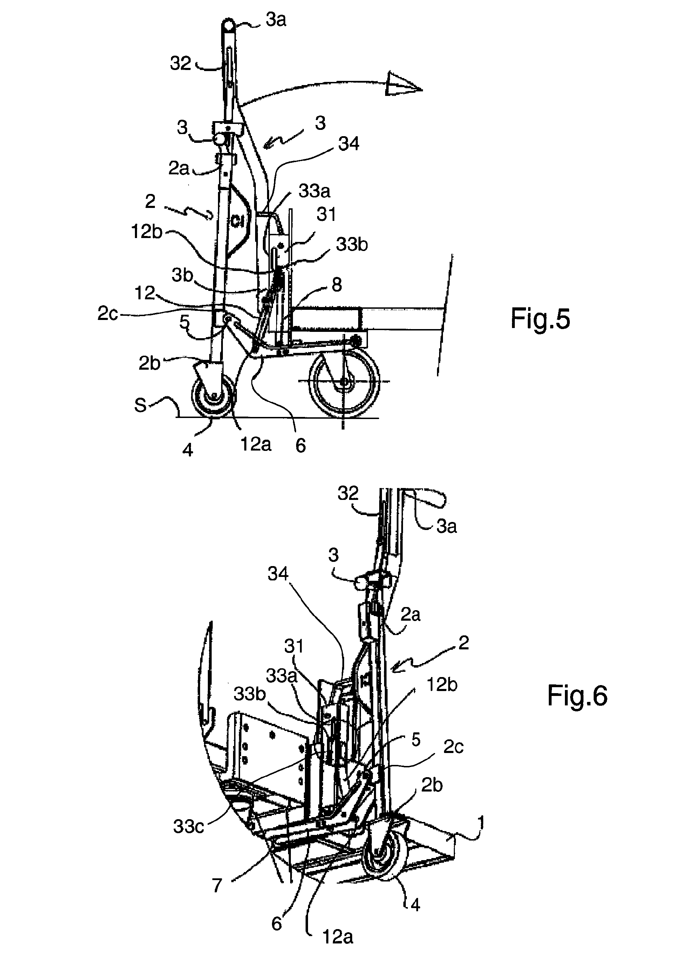

Aux figures, on a représenté par un schéma en coupe l'extrémité arrière 1a de la plateforme 1 d'un chariot d'atelier appelé également base roulante. Le plan de coupe est parallèle à la dimension longitudinale de la base et légèrement décalé par rapport au plan médian de cette dernière à l'endroit où est installé le mécanisme d'aide au démarrage. Aux figures 1 à 3 et 6, le mécanisme est représenté inactif dans son état de repos, c'est- à dire, hors du contact avec le sol S.

Ce mécanisme possède un levier 2 avec une partie supérieure 2a, une partie inférieure 2b qui porte une roue 4 et une partie intermédiaire 2c qui est reliée à la plateforme 1 de la base roulante.

Les moyens de liaison du levier à la plateforme comportent une articulation 5 d'axe perpendiculaire à la direction de poussée A ou de traction B de la base roulante. Cette articulation 5 est mobile en altitude par rapport au sol S.

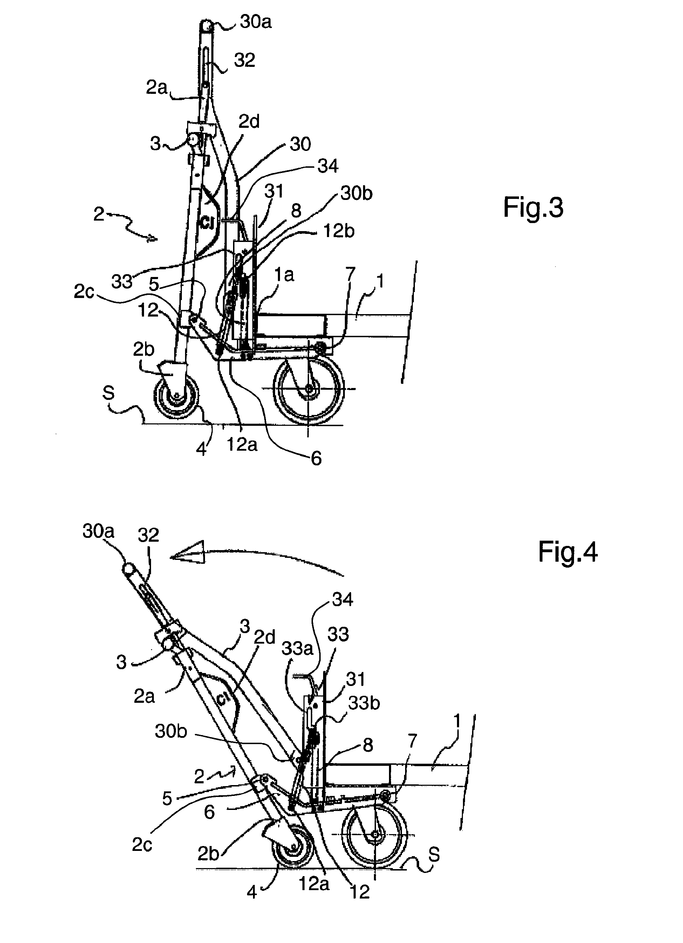

Dans les modes de réalisation des figures 1 et 3 à 6, l'articulation 5 est portée par une bielle 6 qui peut pivoter verticalement par rapport à la plateforme autour d'un axe 7 parallèle à l'axe 5 d'articulation. Cette bielle 7 est rappelée en position haute par un ressort 8 attelé entre elle et un support fixe solidaire de la plateforme et formé d'une petite potence arrière 9 (figure 1) ou d'une platine 31 (figure 3 à 6). Dans cette position supérieure, la bielle 6 est en butée contre la plateforme.

Dans le mode de réalisation de la figure 2, l'articulation 5 est portée par un coulisseau 10 qui est guidé verticalement dans une coulisse 9a qui forme la partie verticale de la potence 9, à l'arrière de la plateforme. Le ressort 8 est alors attelé entre ce coulisseau 10 et la potence 9 et tend à le maintenir dans sa position la plus haute contre une butée supérieure 11 de la coulisse 9a.

Dans ce cas de figure, l'état représenté, l'articulation 5 est à son altitude maximale et la roue 4 est décollée du sol.

En référence aux figures 1 et 2, la partie supérieure 2a est terminée par une poignée 3. On notera que le levier 2 de la réalisation de la figure 2 est coudé, ce qui permet à la partie supérieure 2a de ce dernier d'être au plus proche de la plateforme dans l'état de repos du mécanisme d'aide au démarrage.

Ce mécanisme comporte dans les réalisations des figures 1 et 2, des moyens de blocage du levier 2 dans sa position d'utilisation, c'est-à-dire dans sa position basse. Ces moyens comprennent un embiellage de verrouillage à genouillère qui est formé de deux bielles 12 et 13.

La bielle 12 est une bielle élastiquement télescopique, par exemple un ressort à gaz, dont la tige est articulée en 12a (première extrémité de la bielle 12) au support mobile 6, 10 de l'articulation 5 alors que l'extrémité de son corps (deuxième extrémité de la bielle 12) est articulée en 12b à une bielle 13 qui est elle-même articulée en 13a à la potence 9 de la plateforme. Les articulations 12a, 12b et 13a forment les sommets d'un triangle déformable du fait de la longueur variable de la bielle 12. La déformation possible de ce triangle est telle que l'articulation 12b peut être de part ou d'autre de la ligne qui passe par les articulations fixes 12a et 13. Ainsi on comprend que lorsque cette articulation 12b est sur cette ligne, la configuration du mécanisme correspond à l'altitude la plus basse de l'articulation 5 donc à un contact de la roue 4 avec le sol S et même un contact sous pression du fait de l'action du ressort à gaz formant la bielle 12 qui est comprimé. Les deux configurations stables du triangle sont d'une part, celle représentée aux figures 1 et 2 dans laquelle l'articulation 12b est à droite de la ligne susdite et une configuration non représentée dans laquelle cette articulation est à la gauche de cette ligne sur les figures et la bielle 12 en butée contre un appui 14 que porte la potence 9 et qui est réglable de manière à ce que le triangle dans cette deuxième configuration soit le plus plat possible tout en restant stable.

En effet, pour rendre le mécanisme opérationnel, l'opérateur s'empare de la poignée 3 et naturellement tire le levier à lui, dans le sens de la flèche B. Dans ce mouvement, l'articulation 5 descend et le triangle 12a, 12b et 13a devient plat et, par inertie l'articulation 12b dépasse la ligne 12a, 13a. Dans ce cas, le ressort à gaz formant la bielle 12, partiellement comprimé, bute sur l'appui 13 et la force de ce ressort à gaz contraint le maintien de cet appui et donc le maintien de l'articulation 5 en position de basse altitude. Le contact de la roue 4 au sol est assuré.

Pour faire cesser le verrouillage afin de pouvoir décoller la roue 4 du sol S, l'opérateur repousse le levier 2 en direction du chariot. A la fin de sa trajectoire, le levier 2 rencontre une extrémité recourbée 13b de la bielle 13 et fait pivoter cette dernière pour refaire passer l'articulation 12b à droite de la ligne 12a, 13a sur les figures. Le ressort 8 peut alors relever la bielle 6 ou le coulisseau 10 donc le levier 2. Le levier possède, à l'effet de repousser la bielle 13, une palette 2d.

Sur les figures 1 et 2, on a représenté les moyens pour bloquer la roue 4 à bon escient. On comprend en effet que si la roue reste libre en rotation, elle ne pourra en aucun cas constituer un point fixe de rotation du levier 2, lequel ne pourra pas agir comme un levier du second genre pour l'aide au démarrage.

Ces moyens comprennent la poignée 3 qui est articulée au sommet du levier 2 autour d'un axe 15 parallèle à l'axe 5 et plus précisément la garde 3a de cette poignée qui peut ainsi basculer vers l'avant ou vers l'arrière autour de cet axe 15. Un ressort non représenté tend à replacer la poignée 3 dans sa position centrale. Un loquet sélecteur 16 est articulé en 16a sur le levier 2, sous la poignée 3 pour selon l'une des deux positions qu'il peut prendre, interdire le basculement de la garde. Ainsi, comme représenté, le loquet 16 basculé vers l'extérieur du chariot, empêche la poignée de basculer également vers l'extérieur du châssis. Ce serait l'inverse si le loquet était basculé du côté du châssis. Une tringlerie 17 s'étend sensiblement parallèlement au levier 2. Dans les deux modes de réalisation, cette tringlerie 17 est articulée en 17a par son extrémité supérieure à la garde de la poignée, ici à l'extrémité extérieure de cette garde.

Dans le cas de la figure 1, cette tringlerie se résume à une tringle dont l'autre extrémité est articulée en 17b à une branche d'un étrier 18, lui-même articulé en 18a au levier 2 au dessus de la roue 4. Dans la position neutre de la poignée 3, aucune des branches de l'étrier 18 ne touche la roue 4. Un effort tendant à faire basculer cette poignée vers l'extérieur, vers l'opérateur qui tire le levier à lui, ne change rien dans le cas des figures du fait de la position du loquet 16. En revanche, un basculement inverse de la poignée 3 est transmis par la tringle 17 à l'étrier 18 qui prend fortement appui sur la roue 4 par l'une de ses branches et en constitue un moyen de blocage en rotation. Pour l'autre position du loquet 16, le blocage est obtenu pour un basculement opposé à celui décrit ci-dessus.

Dans le cas de la figure 2, la tringlerie est composée de deux tiges 17, articulées chacune sur un bras de renvoi d'angle 19 pivotant sur le levier 2 pour pouvoir suivre le coude de ce levier et transmettre le mouvement de basculement de la poignée 3 à l'étrier inférieur 18 de la même manière que dans la figure 1.

On notera par ailleurs la présence dans les deux réalisations d'un frein à main qui permet de bloquer la base roulante par rapport au sol. On indiquera que le levier 2 est réalisé de manière tubulaire. Une tige ou un système gaine-câble de transmission est logé à l'intérieur de ce tube. La partie supérieure de ce système possède un doigt latéral 20 qui sort du tube pour coopérer avec une came 21 pivotante autour d'un axe 21a sur le levier tubulaire 2 dont la manoeuvre est facilitée par une poignée 21b. A son autre extrémité, le système comporte un corps du genre patin 22 d'appui sur la roue, à l'intérieur de sa chape de maintien. Quand l'opérateur manoeuvre la poignée 21b à l'abaissement, le patin est poussé par la came pivotante contre la roue et bloque la rotation de cette dernière. Si cette roue est en contact avec le sol, elle constitue un point de blocage de la base roulante par rapport au sol. Le déblocage s'opère par le relevage de la poignée qui remonte le doigt 20 grâce à la présence d'une lumière dans la came 21 qui reçoit le doigt 20, permettant la réversibilité du mouvement.

On remarquera enfin (sur la figure 1) la présence d'un ergot 23 qui est mobile avec le système d'entraînement du patin et qui sort latéralement du tube pour pouvoir être engagé ou dégagé d'une encoche 24 de la bielle 6. Le levier 2 est alors immobilisé autour de l'articulation 5, soit dans son état hors service si la roue ne touche pas le sol, soit dans son état de frein à main si la roue touche le sol. Cette disposition peut également être mise en oeuvre entre le levier 2 et le coulisseau 10 de la figure 2.

L'aide au démarrage de l'invention fonctionne de la manière suivante. L'opérateur choisit d'abord la poussée ou le tirage de la base roulante en plaçant le sélecteur 16 dans la position appropriée. Le cas de la poussée est celui des figures. L'opérateur s'empare de la poignée 3 qui est sensiblement verticale et la tire à lui. Il arme alors le mécanisme, c'est à dire que pendant ce basculement, la roue descend vers le sol et le verrou à genouillère est enclenché. L'opérateur continue d'abaisser le levier 2 et la roue roule sur le sol en direction de la base roulante.

A la fin de ce mouvement, l'opérateur commence la poussée proprement dite du chariot en relevant le levier 2 et en le poussant en direction du châssis. Ce faisant, il bascule la poignée 3, ce qui provoque le basculement de l'étrier 18 et le blocage de la roue 4 par l'une de ses branches. La roue devient alors un point d'appui fixe du levier 2 sur le sol S. Le chariot est donc mis en branle. On notera que dans l'un et l'autre sens de basculement, le vérin 13 varie en longueur pour prendre en compte le mouvement du point d'appui par rapport à la base roulante.

A la fin de la poussée, la palette 2d du levier 2 rencontre la bielle 13 et ouvre le verrou. La roue est immédiatement rappelée vers le haut sous l'effet du ressort 8. Ainsi, un second armement peut être effectué pour une seconde impulsion de poussée ou le levier peut être maintenu dans son état hors service en actionnant la came 21 qui conduit à la pénétration de l'ergot 23 dans l'encoche 24.

Pour effectuer une traction sur la base roulante, l'opérateur bascule le sélecteur 16 vers la gauche des figures. On comprend qu'à partir de cette position neutre, une traction selon la flèche B conduit comme ci-dessus à la descente de la roue et au verrouillage de la genouillère et à la création d'une impulsion de démarrage de la base dans la direction B, car dans ce cas la roue est bloquée par l'autre branche de l'étrier 18. Le basculement de retour s'effectue par roulement de la roue qui est alors débloquée par la poignée 3 qui n'agit plus sur la tringlerie 17.

Quand on veut bloquer la base roulante par rapport au sol, on placera par la came 21 l'ergot 23 dans l'encoche 24 alors que le verrouillage de la genouillère est toujours effectif. Au besoin, il sera prévu à cet effet une autre encoche à côté de l'encoche 24 si cette encoche 24 correspond à une position du levier 2 autour de l'articulation 5 ayant déjà provoqué le déverrouillage. Dans ces conditions, le patin 22 situé à l'extrémité du système de transmission à l'intérieur du levier 2 est appuyé sur la roue 4 et empêche sa rotation donc son roulement sur le sol.

Dans le deuxième mode de réalisation des figures 3 à 6, le chariot comprend un levier d'actionnement 30 ayant une extrémité supérieure 30a pourvue d'une barre horizontale de manoeuvre et une extrémité inférieure 30b montée pour pivoter sur la platine 31 s'étendant à la place de la potence 9. L'axe de pivotement de l'extrémité inférieure 30b est parallèle à l'axe de l'articulation 5 et à l'axe 7 de la bielle 6. L'axe de pivotement de l'extrémité inférieure 30b s'étend à une altitude supérieure à l'articulation 5. La première partie 2a du levier 2 est reliée au levier d'actionnement 30 par un axe reçu à coulissement le long d'une rainure 32 ménagée le long d'une portion du levier 30 voisine de son extrémité supérieure 30a.

La première partie 2a du levier 2 reste pourvue de la poignée 3 qui ne sert plus qu'à actionner un étrier analogue à l'étrier 18 via une tringlerie qui est analogue à la tringlerie 17 et qui s'étend dans le levier 2 tubulaire. Comme dans le premier mode de réalisation, il est en outre prévu un frein à main, non représenté, qui permet de bloquer la base roulante par rapport au sol au moyen d'un patin éventuellement associé à un ergot mobile avec le système d'entraînement du patin pour pouvoir être engagé ou dégagé d'une encoche de la bielle 6 de manière à immobiliser ou libérer le levier 2 autour de l'articulation 5.

La platine 31 a une section transversale en U dont les ailes sont chacune pourvue d'une rainure 33 recevant à coulissement une portion d'un axe solidaire de la deuxième extrémité 12b de la bielle 12. La rainure 33 comporte deux tronçons rectilignes, à savoir un tronçon vertical supérieur 33a et un tronçon vertical inférieur 33c qui sont décalés l'un par rapport à l'autre (le tronçon inférieur 33c est plus proche de la plateforme du chariot que le tronçon supérieur 33a) et qui sont reliés par un coude. Le tronçon supérieur 33a reçoit ledit axe libre à coulissement lorsque l'articulation 5 est au voisinage de sa position haute et le tronçon inférieur 33c reçoit ledit axe libre à coulissement lorsque l'articulation 5 est au voisinage de sa position basse. Le coude comporte un décrochement 33b réalisé sous la forme d'une encoche ménagée dans un bord supérieur du coude. Le décrochement 33b est agencé pour autoriser le passage de l'axe du tronçon supérieur 33a vers le tronçon inférieur 33c mais pour bloquer ledit axe en position lorsque l'articulation 5 quitte sa position basse pour aller vers sa position haute. La rainure 33 et l'axe de la deuxième extrémité 12b de la bielle 12 constituent des moyens débrayables du blocage en position de la deuxième extrémité 12b par rapport au chariot lorsque l'articulation est dans sa position basse.

Le chariot comporte un levier 40 de débrayage des moyens débrayables de blocage en position de la deuxième extrémité 12b. Le levier de débrayage 40 a une première extrémité qui est en interférence avec la trajectoire de la première partie 2a du levier 2 lorsque cette dernière est pivotée en direction du chariot et une deuxième extrémité coopérant avec la deuxième extrémité 12b de la bielle 12. Le levier de débrayage 40 a une partie centrale montée pour pivoter dans la platine 31 et fonctionne comme un levier du premier genre.

Le fonctionnement de l'aide au démarrage de l'invention selon le deuxième mode de réalisation est analogue à celui du premier mode de réalisation. Le cas de la poussée est celui des figures. L'opérateur s'empare de la poignée ou main courante fixée sur l'extrémité supérieure 30a du levier d'actionnement 30 et la tire à lui. Le levier 30 bascule en emmenant avec lui la partie 2a du levier 2 dont il entraîne le basculement autour de l'articulation 5. Il arme alors le mécanisme, c'est à dire que pendant ce basculement, la roue descend vers le sol et la deuxième extrémité 12b de la bielle 12 coulisse vers le bas dans le tronçon supérieur 33a. L'opérateur continue d'abaisser le levier 2 et la roue roule sur le sol en direction de la base roulante tandis que la deuxième extrémité 12b de la bielle 12 s'engage dans le tronçon inférieur 33c.

A la fin de ce mouvement, l'opérateur commence la poussée proprement dite du chariot en relevant le levier d'actionnement 3 et donc le levier 2 et en le poussant en direction du châssis. L'axe de la deuxième extrémité 12b s'engage dans le décrochement 33b de la rainure 33 qui le maintient en position. L'opérateur bascule la poignée 3, ce qui provoque le basculement de l'étrier et le blocage de la roue 4 par l'une de ses branches et la roue 4 devient alors un point d'appui fixe du levier 2 sur le sol S. Le chariot est donc mis en branle. On notera que dans l'un et l'autre sens de basculement, la bielle 12 varie en longueur pour prendre en compte le mouvement du point d'appui par rapport à la base roulante.

A la fin de la poussée, la palette 2d du levier 2 vient en contact de la première extrémité du levier de débrayage 34 qu'elle repousse en direction du chariot, le levier de débrayage 34 bascule et la deuxième extrémité du levier coopérant avec la deuxième extrémité 12b de la bielle 12 chasse ladite extrémité du décrochement 33b. La deuxième extrémité 12b de la bielle 12 s'engage alors dans le tronçon supérieur 33a sous l'effet du ressort 8 ramenant la platine 6 en position haute et de la détente de la bielle 12.

La roue est ainsi immédiatement rappelée vers le haut sous l'effet du ressort 8. Ainsi, un second armement peut être effectué pour une seconde impulsion de poussée ou le levier peut être maintenu dans un état hors service.

Pour effectuer une traction sur la base roulante, il est procédé comme dans le premier mode de réalisation.

Bien entendu, l'invention n'est pas limitée aux modes de réalisation décrits mais englobe toute variante entrant dans le champ de l'invention telle que définie par les revendications.

En particulier, la roue 4 peut être remplacée par un patin d'appui sur le sol S.

Les deux modes de réalisation peuvent être mélangés : ainsi, le premier mode de réalisation peut être pourvu d'un levier 30 et le deuxième mode de réalisation peut être pourvu d'un coulisseau 10 à la place de la bielle 6.

L'invention ne concerne pas uniquement le chariot équipé d'un mécanisme d'aide au démarrage mais également le mécanisme d'aide au démarrage seul. Le mécanisme d'aide au démarrage seul peut être monté sur tout type de véhicule ou plateforme roulante. Le mécanisme d'aide au démarrage comporte un levier 2 de démarrage de la plateforme avec une première partie 2a, une deuxième partie 2b coopérant avec un organe de son contact 4 avec le sol et une partie intermédiaire 2c située entre les première et deuxième parties et pourvue des moyens de sa liaison à la plateforme 1 avec une liberté de pivotement par rapport à cette dernière, la partie intermédiaire du levier exerçant, dans l'un - moteur- des deux sens de pivotement du levier, un effort sur la plateforme qui entraîne le déplacement de cette dernière dans un sens correspondant au sens de pivotement moteur du levier, **caractérisé en ce que** la liaison de la plateforme et du levier est une articulation 5 d'axe perpendiculaire à la direction du déplacement à imprimer à la plateforme, mobile en altitude par rapport à la plateforme 1 entre une première position dans laquelle l'organe de contact 4 susdit est éloigné du sol et une seconde position dans laquelle cet organe 4 est en contact avec le sol S, la seconde position étant atteinte par abaissement du levier 2 à l'encontre d'un organe de rappel 8 de l'articulation dans sa première position et étant maintenue par une bielle élastiquement télescopique 12 ayant une première extrémité 12a liée en altitude à l'articulation et une deuxième extrémité 12b associée à des moyens débrayables de son blocage en position par rapport au chariot lorsque l'articulation est au voisinage de sa deuxième position.

## Revendications

1. Chariot de manutention comportant une plateforme (1) roulante, un levier (2) de démarrage du chariot avec une première partie (2a), une deuxième partie (2b) coopérant avec un organe de son contact (4) avec le sol et une partie intermédiaire (2c) située entre les première et deuxième parties et reliée à la plateforme (1) avec une liberté de pivotement par rapport à cette dernière, la partie intermédiaire du levier exerçant, dans l'un - moteur- des deux sens de pivotement du levier, un effort sur la plateforme qui entraîne le déplacement de cette dernière dans un sens correspondant au sens de pivotement moteur du levier, **caractérisé en ce que** la liaison de la plateforme et du levier est une articulation (5) d'axe perpendiculaire à la direction du déplacement à imprimer au chariot, mobile en altitude par rapport à la plateforme (1) entre une première position dans laquelle l'organe de contact (4) susdit est éloigné du sol et une seconde position dans laquelle cet organe (4) est en contact avec le sol (S), la seconde position étant atteinte par abaissement du levier (2) à l'encontre d'un organe de rappel (8) de l'articulation dans sa première position et étant maintenue par une bielle élastiquement télescopique (12) ayant une première extrémité (12a) liée en altitude à l'articulation et une deuxième extrémité (12b) associée à des moyens débrayables de son blocage en position par rapport au chariot lorsque l'articulation est au voisinage de sa deuxième position.

2. Chariot selon la revendication 1, dans lequel la deuxième extrémité (12b) de la bielle élastiquement télescopique (12) est reliée au chariot par une bielle (13) de manière à former un embiellage à genouillère constituant les moyens de blocage en position de la deuxième extrémité de la bielle élastiquement déformable.

3. Chariot selon la revendication 2, dans lequel l'embiellage à genouillère possède une extrémité (13b) de débrayage qui est en interférence avec la trajectoire de la première partie du levier (2) lorsque cette dernière est pivotée en direction du chariot.

4. Chariot selon la revendication 1, dans lequel la deuxième extrémité (12b) de la bielle élastiquement télescopique (12) est pourvue d'un axe reçu à coulissement le long d'une rainure (33) qui est ménagée dans une platine (31) solidaire du chariot et qui comporte un décrochement (33b) pour recevoir ledit axe lorsque l'articulation est au voisinage de sa deuxième position.

5. Chariot selon la revendication 4, comportant un levier de débrayage (40) des moyens débrayables de blocage, le levier de débrayage ayant une première extrémité qui est en interférence avec la trajectoire de la première partie du levier (2) lorsque cette dernière est pivotée en direction du chariot et une deuxième extrémité coopérant avec la deuxième extrémité (12b) de la bielle élastiquement télescopique (12).

6. Chariot selon la revendication 1, dans lequel l'articulation (5) du levier (2) à la plateforme (1) est portée par une bielle (6) pivotante par rapport à la plateforme.

7. Chariot selon la revendication 1, dans lequel l'articulation (5) du levier (2) à la plateforme est portée par un coulisseau (10) vertical du chariot.

8. Chariot selon l'une des revendications précédentes, dans lequel l'organe de contact est une roue (4) pourvue d'un frein (18) de son blocage, mis en oeuvre par la commande manuelle du levier (2) dans le sens moteur.

9. Chariot selon la revendication 8, dans lequel le frein de blocage possède un sélecteur (16) qui interdit sa mise en oeuvre dans une manoeuvre du levier dans le sens opposé au sens moteur.

10. Chariot selon l'une des revendications précédentes, dans lequel le levier (2) constitue le support pour un patin secondaire (22) de blocage la roue (4), qui peut être mis en service dans une position indexée du levier (2) autour de l'articulation (5).

11. Chariot selon la revendication 1, comportant un levier d'actionnement (30) ayant une extrémité supérieure de manoeuvre (30a), une extrémité inférieure montée pour pivoter sur le chariot à une altitude supérieure à l'articulation (5), la première partie du levier (2) portant l'élément de contact (4) étant reliée au levier d'actionnement au voisinage de son extrémité supérieure.

12. Mécanisme d'aide au démarrage, comportant un levier (2) de démarrage de la plateforme avec une première partie (2a), une deuxième partie (2b) coopérant avec un organe de son contact (4) avec le sol et une partie intermédiaire (2c) située entre les première et deuxième parties et pourvue des moyens de sa liaison à la plateforme (1) avec une liberté de pivotement par rapport à cette dernière, la partie intermédiaire du levier exerçant, dans l'un - moteur- des deux sens de pivotement du levier, un effort sur la plateforme qui entraîne le déplacement de cette dernière dans un sens correspondant au sens de pivotement moteur du levier, **caractérisé en ce que** la liaison de la plateforme et du levier est une articulation (5) d'axe perpendiculaire à la direction du déplacement à imprimer à la plateforme, mobile en altitude par rapport à la plateforme (1) entre une première position dans laquelle l'organe de contact (4) susdit est éloigné du sol et une seconde position dans laquelle cet organe (4) est en contact avec le sol (S), la seconde position étant atteinte par abaissement du levier (2) à l'encontre d'un organe de rappel (8) de l'articulation dans sa première position et étant maintenue par une bielle élastiquement télescopique (12) ayant une première extrémité (12a) liée en altitude à l'articulation et une deuxième extrémité (12b) associée à des moyens débrayables de son blocage en position par rapport au chariot lorsque l'articulation est au voisinage de sa deuxième position.
